Europäisches Patentamt

(19) European Patent Office

Office européen des brevets

(11) Publication number: **0 317 311**
**A2**

(12) **EUROPEAN PATENT APPLICATION**

(21) Application number: **88310853.2**

(22) Date of filing: **17.11.88**

(51) Int. Cl.⁴: **G 06 K 11/06**

(30) Priority: **18.11.87 GB 8726964**

(43) Date of publication of application:
**24.05.89 Bulletin 89/21**

(84) Designated Contracting States: **DE FR GB IT**

(71) Applicant: **ACER INCORPORATED**
**602 Min Sheng East Road**
**Taipei 10445 (TW)**

(72) Inventor: **Hsu, Robert Hon-chang**
**No. 43, Lane Liu-her Sherfeng Road**
**Chiau-tou Hsian Kau-shun Hsien (TW)**

**Lin, Steven Swen-wen**
**No.3 Lane 433 San Min Road**
**Chang-hua (TW)**

(74) Representative: **Skone James, Robert Edmund et al**
**GILL JENNINGS & EVERY 53-64 Chancery Lane**
**London WC2A 1HN (GB)**

(54) Encoder and encoding assembly.

(57) An improvement on the encoder of a logic mouse, comprising a number of circumferentially spaced radiation controlling portions (150), each portion having substantially the same circumferential extent (T°) and including a gate section (151) through which radiation can pass, each gate section having substantially a same circumferential extent (X°) and a blocking section (152) through which the radiation cannot pass. A pair of windows (A,B) is aligned with the radiation controlling portions, each window having substantially the same circumferential width (C°) and being circumferentially spaced apart at a fixed spacing ($\theta°$), wherein the windows and radiation controlling portions are relatively movable, characterised in that
$\theta = nT \pm T/4$, where n is an integer
$X + C = T/2$; and
$C = T/8$.

Fig.6.

EP 0 317 311 A2

**Description**

## ENCODER AND ENCODING ASSEMBLY

The present invention relates to an encoder and an encoding assembly, particularly an assembly for encoding position such as a "logic mouse".

The logic mouse has been widely used together with the computer, especially for drawing. The mouse is used to move a cursor on a screen as well as to select the function to be performed by the computer. Hence the mouse has become an important equipment of the computer.

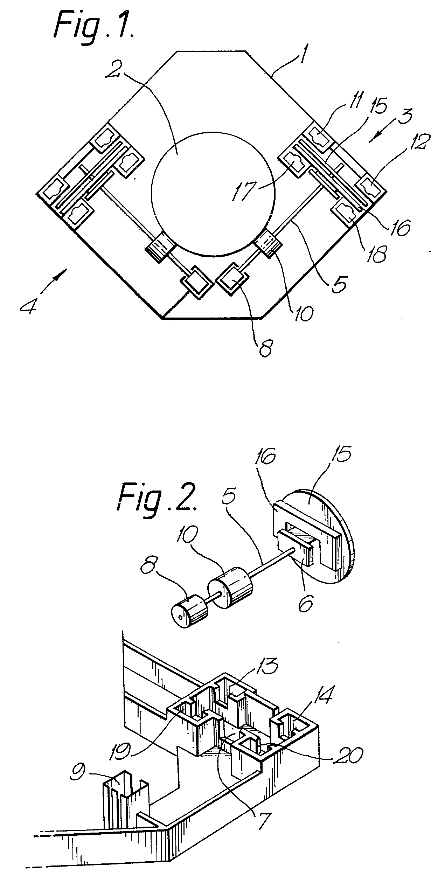

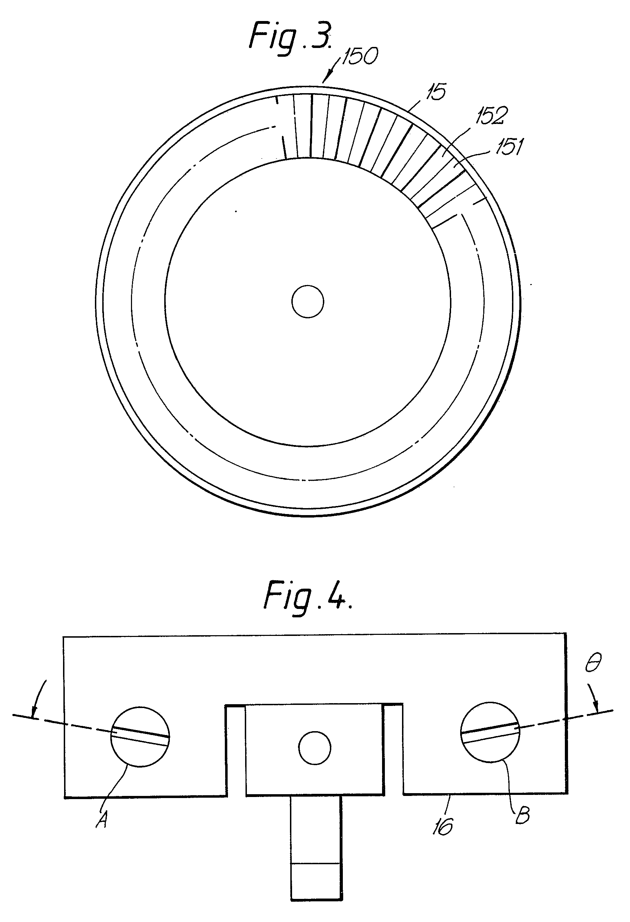

A conventional logic mouse is illustrated in Figures 1 to 4 of the accompanying drawings. The mouse comprises a housing 1 on the underside of which is mounted a ball 2 which in use rests on a table or the like and rotates with movement of the mouse across the table. A pair of encoding assemblies 3, 4 are positioned in the housing 1. Each encoding assembly comprises an encoder having an encoder disc 15 (shown in more detail in Figure 3), the encoder disc being mounted non-rotatably to a shaft 5. Each encoder also includes a generally U-shaped mask 16 slidably mounted on the shaft 5 and having a section 6 which locates in a corresponding recess 7 of the housing 1 to support that end of the shaft 5. The other end of the shaft is supported by a bearing 8 which is received in a bearing mounting 9 of the housing 1. A roller 10 is non-rotatably mounted to the shaft 5 and engages the ball 2, as can be seen in Figure 1. For simplicity, only the elements of the encoder assembly 3 have been labelled in Figure 1 and it wil be seen that the elements of the encoder assembly 4 are identical.

The encoding assembly also includes pair of infra-red light sources 11, 12 mounted in recesses 13, 14 of the housing 1 and a pair of infra-red detectors 17, 18 mounted in recesses 19, 20 of the housing 1 in alignment with the sources 11, 12 respectively. Each detector 17, 18 generates an output signal A(o), B(o) if it receives infra-red radiation, the two signals being fed along conductors (not shown) to the computer to which the mouse in connected.

Movement of the mouse will cause rotation of the ball 2 and thus rotation of the rollers 10. This causes the shafts 5 to rotate and hence the encoder discs 15 will rotate.

Each encoder disc 15 is divided into thirty portions 150, each portion extending circumferentially through 12 degrees. As illustrated in Figure 3, each portion has a light gate section 151 which extends through 6 degrees (X) and through which infra-red radiation can pass; and a blocking section 152 through which infra-red radiation cannot pass. The circumferential extent (T) of each portion 150 is 12°. Thus, the area ratio of the light gate section/portion is zero point five (0.5).

There are two windows A, B on the mask 16 (Figure 4) and there is a certain angle ($\theta$) between the two windows. Each window A, B comprises a slit narrower than the light gate sections 151.

There are four different combinations of output signals from the detectors 17, 18 which can be obtained (i.e. four phases) depending on the relative position between the encoder disc 15 and mask 16. They are: A(o)'B(x), A(o)'B(o) ,A(x)'B(o), A(x)'B(x), where "o" indicates the detection of incident radiation while "x" indicates no radiation is detected. These four phases are used in a known manner to control a cursor by indicating the position of the mouse.

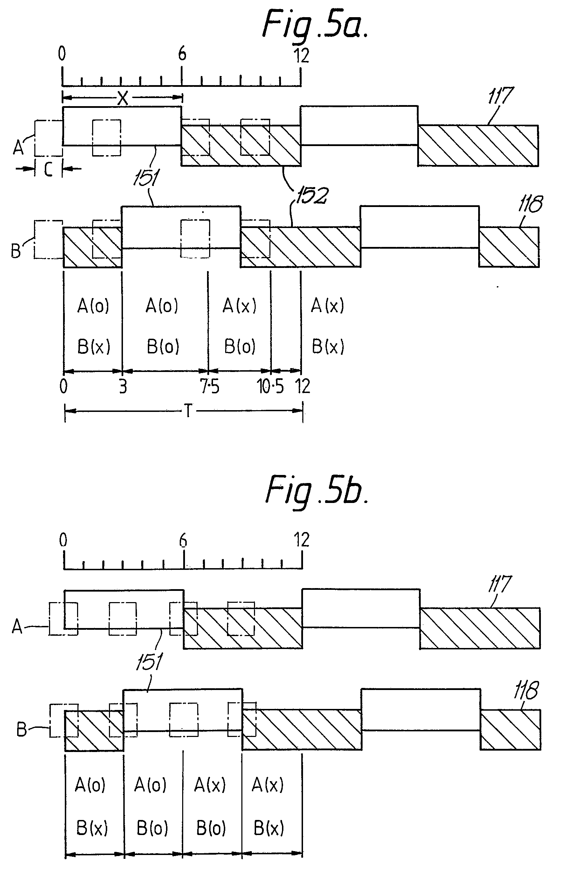

Figure 5a is a simple chart to explain the four phases generated by the encoder disc 15 and mask 16. In this chart, the upper and lower lines 117, 118 represent the radiation controlling portions as they pass the windows A,B respectively. For clarity the windows A,B are shown aligned with the radiation controlling portions offset by the difference between their actual angular spacing ($\theta$) and the largest integral multiple of the circumferential extent of each portion 150 (12°). The lower section of Figure 5a indicates the output signals A,B from the detectors 17, 18 respectively. The hatched sections of lines 117, 118 indicate blocking sections 152 while the remaining sections indicate light gate sections 151. In this case, the window B leads the window A by 3 degrees relative to the respective portions 150 aligned with the openings.

We now consider the time or duration of each phase and we use degree(s) to represent that. In Figure 5a, the encoder disc 15 is a standard size, that means the light gate occupies 6 degrees, while the windows A or B of the mask occupy 1.5 degrees each, as shown by a ghost line in this Figure ie. C = 1.5°. When the encoder disc 15 moves relatively to the mask 16 so that a complete portion 150 passes the window A then a four-phase signal occurs, that is, the following outputs occur from the detectors: A(o)'B(x) within 0-3 degree, A(o)'B(o) within 3-7.5 degree, A(x)'B(o) within 7.5-10.5 degree, and A(x)'B(x) within 10.5-12 degree. Accordingly, we find that the standard-size encoder disc cannot generate an equal-time-phase signal.

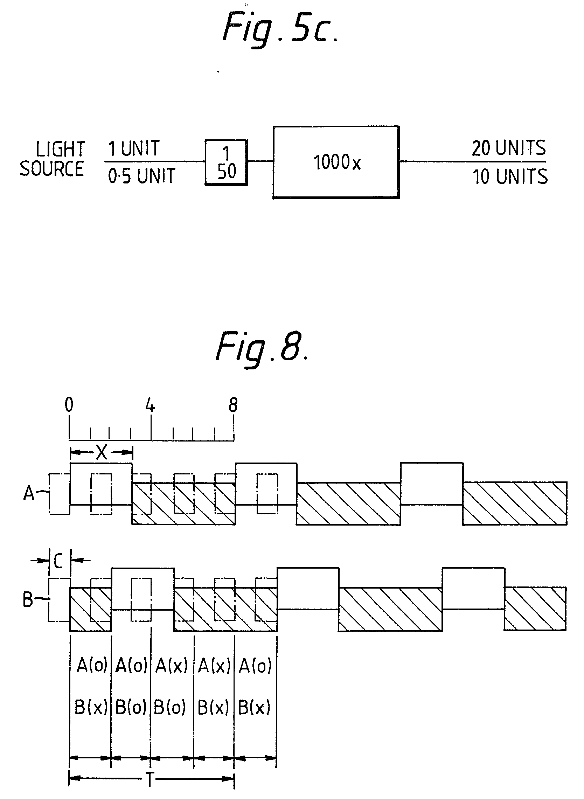

In order to overcome this problem, complicated circuits have been used to control and change the timing of each phase. This has involved detecting the signal at the centre of the two windows A, B of mask 16, and the four phases are changed entirely as illustrated in Figure 5b. By using this method, the duration of each phase will be equal. From Figure 5b we see that: A(o)'B(x) occurs within 0.75-3.75, A(o)'B(o) occurs within 3.75-6.75, A(x)'B(o) occurs within 6.75-9.75 and A(x)'B(x) occurs within 9.75-0.75. This result is satisfactory, but it can only be achieved with a complicated circuit. Figure 5c, illustrates one way of achieving this using a circuit which decreases the signal detected from the windows of the mask. A light source should be decreased 50 times. That means a 100 unit source should be decreased to 20 units. If the light source is weakened because of aging of the electronic units, the signal will be changed consequently. Such defects have not only caused the "mouse" to be expensive, but also have a low reliability. Until now, no adequate solution has been provided in the prior art for this rather common phenomena.

In accordance with one aspect of the invention, an encoder for use with radiation generating and detection means comprises a number of circumferentially spaced radiation controlling portions, each portion having substantially the same circumferential extent (T°) and including a gate section through which radiation can pass, each gate section having substantially the same circumferential extent (X°), and a blocking section through which the radiation cannot pass, and a pair of windows aligned with the radiation controlling portions, each window having substantially the same circumferential width (C°) and being circumferentially spaced apart at a fixed spacing (θ°), wherein the windows and radiation controlling portions are relatively movable, characterised in that

$\theta = nT \pm T/4$, where n is an integer

$X + C = T/2$; and

$C = T/8$.

In accordance with a second aspect of the present invention, an encoder assembly comprises radiation generating means; radiation detection means; and an encoder according to the first aspect of the invention positioned between the radiation generating and detection means, wherein the radiation detection means is adapted to detect radiation passing through the windows of the encoder.

The present invention provides an improvement of the encoder. If the equations set out above are satisfied then the ratio of the gate section to the controlling portion will be equal to 0.375 and it can generate a four-equal-time phase directly from the mask side and without any circuit to modify it. By so doing, it simplifies the structure of the mouse, increases the reliability of the mouse, and consequently the cost of the mouse is lowered.

In one example 30 radiation controlling portions are provided with T = 12° so that each window has a width C = 1.5°, the windows are relatively positioned 3° apart, and each gate portion has a circumferential extent x = 4.5°.

In another example the total number of controlling portions is 45 with T = 8° so that C = 1°, θ = nT + 2° and X = 3°.

Conveniently, the windows are provided in a mask, respective detectors being positioned to receive radiation passing through the windows.

The radiation may comprise any suitable form of radiation, the gate and blocking sections being chosen accordingly. Preferably, however, the radiation comprises infra-red radiation.

An example of a conventional encoder and an encoding assembly and examples of an encoder and encoding assembly according to the invention are illustrated in the accompanying drawings, in which:-

Figure 1 is a bottom plan of a conventional encoding assembly;

Figure 2 is a partial perspective and exploded view of the assembly shown in Figure 1;

Figure 3 is a plan of a conventional encoder;

Figure 4 is a plan of the mask shown in Figures 1 and 2;

Figure 5a illustrates the four phases generated by the conventional assembly;

Figure 5b illustrates the four phases of Figure 5a after modification is a known manner;

Figure 5c is a schematic flow-diagram of a known method for modifying the phases;

Figure 6 is similar to Figure 5a but illustrates the four phases generated by an example of an encoder according to the invention;

Figure 7 is a plan of the encoder corresponding to the Figure 6 example; and,

Figure 8 is similar to Figure 5a but illustrates schematically a second example according to the invention.

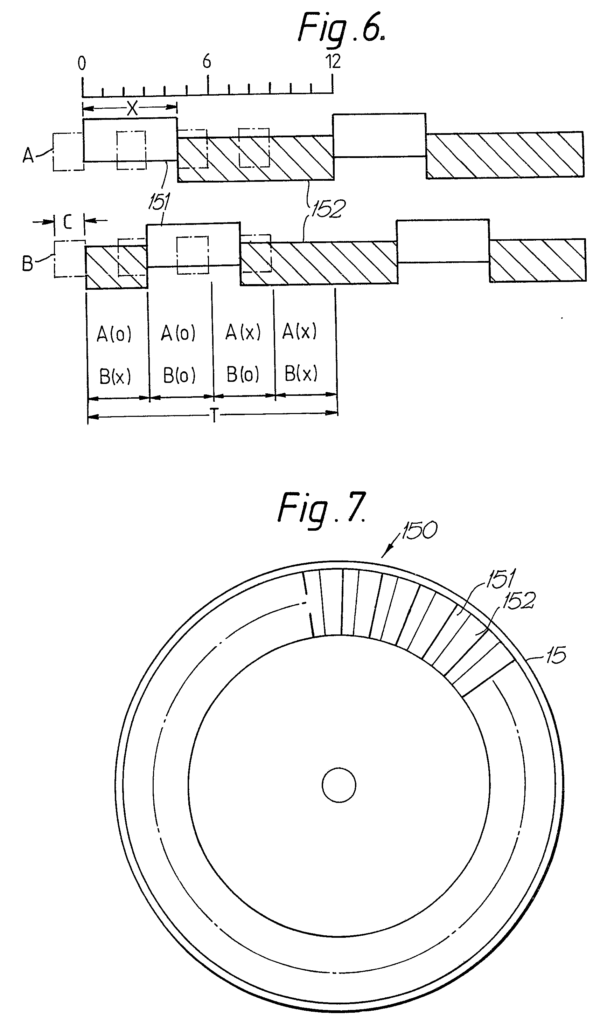

In the Figure 6 example, the circumferential extent (X) of the light gate section 151 of each portion 150 of the encoder disc 15 is four and a half (4.5) degrees, and the circumferential extent of the portion 150 is 12°(T) which means the ratio of the light gate/portion is 0.375 (see Figure 7). The windows A and B have the same circumferential extent (C) equal to 1.5° and are spaced apart by 3° (plus an integral number n of circumferential extents T of the portion). When the portions 150 of the encoder disc 15 move relative to the windows A and B and we detect the signal right after the windows A and B contact or lose contact with respective light gate sections 151 of the encoder disc 15, then we can get the signal whose four phases are: A(o)'B(x) at 0-3 degree, A(o)'B(o) at 3-6 degree, A(x)'B(o) at 6-9 degree and A(x)'B(x) at 9-12 degree. Thus each phase occupies the same time or circumferential movement and this has been achieved without any of the complex circuitry which has previously been necessary.

Figure 8 illustrates a second example in which each gate section 151 has a circumferential extent (X) of 3° while each radiation controlling portion 150 has a circumferential extent (T) of 8°. Forty five radiation controlling portions 150 are provided. Applying the formulae set out above, each of the windows A, B will have a circumferential extent (C) of 1° and be relatively spaced apart in the circumferential direction by 2°. Of course, as in Figure 6, the actual circumferential spacing (θ) will be some integral multiple n of the circumferential extent of each controlling portion plus the small differential, in this case 2°.

As in the Figure 6 example, it can be seen in Figure 8 that each of the four phases of the signal occupies the same amount of relative movement between the windows A, B and the radiation controlling portions 150.

## Claims

1. An encoder for use with radiation generating and detection means comprises a number of circumferentially spaced radiation controlling portions (150), each portion having substantially the same circumferential extent (T°) and including a gate section (151) through which radiation can pass, each gate section having substantially the same circumferential extent (X°), and a blocking section (152) through which the radiation cannot pass, and a pair of windows (A,B) aligned with the radiation controlling portions, each window having substantially the same circumferential width (C°) and being circumferentially spaced apart at a fixed spacing (θ°), wherein the windows and radiation controlling portions are relatively movable, characterised in that

$\theta = nT \pm T/4$, where n is an integer

$X + C = T/2$; and

$C = T/8$.

2. An encoder according to claim 1, wherein the radiation controlling portions are provided in an encoder disc (15).

3. An assembly according to claim 1 or claim 2, wherein the windows (A,B) are provided in a mask (16).

4. An encoder assembly comprising radiation generating means (11,12); radiation detection means (17,18); and an encoder according to any of the preceding claims positioned between the radiation generating and detection means, wherein the radiation detection means is adapted to detect radiation passing through the window (A,B) of the encoder.

5. An assembly according to claim 4, further comprising a housing (1) in which the encoder is rotatably mounted; and a position responsive member (2) mounted in the housing and adapted to cause relative rotation between the windows (A,B) and the radiation controlling portions (150) in response to movement of the housing (1).

6. An assembly according to claim 4 or claim 5, wherein the radiation is infra-red radiation.

Fig.1.

Fig.2.

## Fig. 3.

150

15

152

151

## Fig. 4.

θ

A

16

B

*Fig.5a.*

*Fig.5b.*

# Fig.5c.

LIGHT
SOURCE
$\dfrac{1\ \text{UNIT}}{0\cdot5\ \text{UNIT}}$ ⟶ $\boxed{\dfrac{1}{50}}$ ⟶ $\boxed{1000x}$ ⟶ $\dfrac{20\ \text{UNITS}}{10\ \text{UNITS}}$

# Fig.8.

A(o) A(o) A(x) A(x) A(o)

B(x) B(o) B(o) B(x) B(x)

*Fig.6.*

0    6    12

X

A

*151*    *152*

C

B

| A(o) | A(o) | A(x) | A(x) |
|------|------|------|------|
| B(x) | B(o) | B(o) | B(x) |

T

*Fig.7.*

*150*

*151*

*152*

*15*